(19) **Europäisches Patentamt**
**European Patent Office**
**Office européen des brevets**

(11) **EP 3 925 740 B1**

(12) **EUROPEAN PATENT SPECIFICATION**

(45) Date of publication and mention
of the grant of the patent:
**18.12.2024 Bulletin 2024/51**

(51) International Patent Classification (IPC):
**B26D 5/00** (2006.01)    **B27L 7/00** (2006.01)
**G01F 17/00** (2006.01)

(21) Application number: **21178458.2**

(22) Date of filing: **09.06.2021**

(52) Cooperative Patent Classification (CPC):
**B26D 5/00; B27B 1/007; G01F 17/00;** B23D 36/00;
B27B 31/06; G01B 21/02

(54) **METHOD FOR MEASURING THE AMOUNT OF LOGS AND MEASURING SYSTEM FOR A CUTTING AND SPLITTING MACHINE**

VERFAHREN ZUM MESSEN DER LANGHOLZMENGE UND MESSSYSTEM FÜR EINE SCHNEID- UND SPALTMASCHINE

PROCÉDÉ DE MESURE DE LA QUANTITÉ DE BOIS LONG ET SYSTÈME DE MESURE POUR UNE FENDEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2020 SI 202000108**

(43) Date of publication of application:
**22.12.2021 Bulletin 2021/51**

(73) Proprietor: **Uniforest, D.o.o.**
**3312 Prebold (SI)**

(72) Inventors:
• **Horvat, Robert**
**3302 Grize (SI)**

• **Polak, Marko**
**3303 Gomilsko (SI)**
• **Pintar, Drago**
**3301 Petrovce (SI)**

(74) Representative: **Sveticic, Andrej**
**Patentna pisarna d.o.o.**
**Copova 14**
**1000 Ljubljana (SI)**

(56) References cited:
**US-A- 3 554 249**

## Description

### Field of Invention

The invention relates to a method for determining the amount of logs on a cutting and splitting machine and a measuring system for determining the amount of logs on a cutting and splitting machine.

### Prior Art

Various log cutting and splitting machines are known from prior art, some of which are fully automated and also enable the measurement of the amount of split logs. In log cutting and splitting machines known from the prior art, a gauge is configured as an analogue angle gauge on a holding arm resting on a log. With these machines, the height of the splitting knife is also automatically adjusted using a log thickness gauge. The thickness of a log before cutting is measured with a gauge installed at the point of rotation of the log holding arm (position meter 0-359°). For complete information on the amount of split logs, information on cutting cycles performed by the machine is also required. For this purpose, the cutting and splitting machine has a final position meter on both the cutting and splitting part of the machine. When cutting, a problem often arises that a piece of log has to be cut several times. In the case of twisted logs, it happens that a cut part of a log presses on the cutting element, i. e. on a saw blade or circular saw, causing the cutting process to stop. In this case, it is necessary to repeat the cutting process so many times that the cutting width is so large as to allow the cutting process to the full diameter of the trunk. This shows that the data on the thickness of a log and the cutting cycle are not sufficient to properly measure the amount of logs. Information on splitting is needed, too. Only the splitting of a log is an indication that the log, the thickness of which was previously measured, actually got into a splitting trough. But the problem can also arise here. If a log in the splitting trough is turned transversely, or if there is a very solid knot in a part of the log, the splitting process is not carried out in the first attempt. It is often necessary to intervene in the area of the splitting trough and repeat the splitting process. The measurement is therefore correct only when the sequence of cutting, splitting and re-cutting is detected. The measurement of the amount of logs in these machines is therefore performed using three measuring points. The quantity of logs is determined on the basis of the measured log diameter, the cutting cycle and the splitting cycle.

Document SE 353 958 B (ASEA AB) discloses an apparatus and method for grading and classifying debranched tree trunks or similar round-wood. The apparatus includes a system for sensing change in diameter of the wood along its length; and for registering differences in diameter along the length of the wood. A device than determines the degree of crookedness of the wood along its length and registers the crookedness of the wood whereafter signals are sent in response to variations in diameter of the wood and in response to varying degree of crookedness of the wood. Upon receipt of these signals the wood cut or marked or sorted according to a predetermined program based upon standard norms for saw wood and pulpwood.

A disadvantage of the known prior art is that a known measuring system cannot be used on existing cutting and splitting machines without interfering with the construction of the machine. Known measuring systems are relatively complex.

### Technical Problem

A technical problem is how to configure a method for determining the amount of logs on a cutting and splitting machine that will allow for a precise and reliable determination of the amount of log, and a measuring system for determining the amount of logs on a cutting and splitting machine that will be price effective and reliable and installable on existing cutting and splitting machines without a need to modify the machine.

### Solution to the Technical Problem

The technical problem is solved by a method for determining the amount of logs on a cutting and splitting machine comprising the steps:

a) calibrating a distance meter to obtain an initial distance $r_0$, wherein initial distance $r_0$ represents the distance from the contactless distance meter to the base on which the log rests during the transition from the cutting to the splitting part of the machine,
b) continuously performing distance measurements, a measurement cycle starting when a contactless distance meter measures a distance shorter than the initial distance $r_0$ and longer than the initial distance $r_0$ reduced by a predetermined tolerance distance $r_{tol}$,
c) capturing distance measurements at a predetermined time interval $\Delta t$,
d) rounding the captured discrete values of the measured distance,
e) comparing a predetermined number of consecutive rounded captured discrete values of the measured distance and excluding measurements if these values are not the same,
f) comparing successively captured distance measurements at a predetermined time interval $\Delta t$ without the measurements excluded in the previous step, excluding distance measurements that do not follow the pattern of the initial gradually shortening the measured distance and then lengthening the measured distance,
g) storing the shortest measured distance $r_d$,
h) completing a measurement cycle when the contactless distance meter detects a distance between

$r_0$ and $r_0$-$r_{tol}$, excluding all measurements measured within a predetermined time interval $\Delta t_z$ from the moment the contactless distance meter has detected the distance between $r_0$ and $r_0$-$r_{tol}$,

i) calculating a volume of a log at each end of the measurement cycle according to the equation:

$$V_i = \pi \left(\frac{r_0 - r_d}{2}\right)^2 l$$

, where 1 is the displacement of a log in its longitudinal direction through the cutting part of the machine,

j) calculating the total amount of logs by adding the contribution of the calculated volume of the log,

k) repeating the steps b) to j).

The subject of the invention is also a measuring system for determining the amount of logs on a cutting and splitting machine, comprising a contactless distance meter and a computer with a processing unit adapted to perform the method described above for determining the amount of logs on a cutting and splitting machine.

The advantage of the method and the measuring system for determining the amount of logs on a cutting and splitting machine of the invention lies in that they allow for a precise and reliable determination of the amount of logs in a simple and price effective way. A further advantage of the measuring system is that it can also be installed on existing cutting and splitting machines without major interventions in the construction of the machine.

Figure 1: Schematic representation of the arrangement of a contactless distance meter on a horizontal and vertical cutting and splitting machine
Figure 2: Schematic representation of the measurement process during the transition of a log from a cutting to a splitting part of the machine
Figure 3: Measurement diagram

The invention is described in more detail hereinbelow.

The technical problem is solved by a method for determining the amount of logs on a cutting and splitting machine comprising the steps:

a) calibrating a distance meter to obtain an initial distance $r_0$, wherein initial distance $r_0$ represents the distance from the contactless distance meter to the base on which the log rests during the transition from the cutting to the splitting part of the machine,

b) continuously performing distance measurements, a measurement cycle starting when a contactless distance meter measures a distance shorter than the initial distance $r_0$ and longer than the initial distance $r_0$ reduced by a predetermined tolerance distance $r_{tol}$,

c) capturing distance measurements at a predetermined time interval $\Delta t$,

d) rounding the captured discrete values of the measured distance,

e) comparing a predetermined number of consecutive rounded captured discrete values of the measured distance and excluding measurements if these values are not the same,

f) comparing successively captured distance measurements at a predetermined time interval $\Delta t$ without the measurements excluded in the previous step, excluding distance measurements that do not follow the pattern of the initial gradually shortening the measured distance and then lengthening the measured distance,

g) storing the shortest measured distance $r_d$,

h) completing a measurement cycle when the contactless distance meter detects a distance between $r_0$ and $r_0$-$r_{tol}$, excluding all measurements measured within a predetermined time interval $\Delta t_z$ from the moment the contactless distance meter has detected the distance between $r_0$ and $r_0$-$r_{tol}$,

i) calculating a volume of a log at each end of the measurement cycle according to the equation:

$$V_i = \pi \left(\frac{r_0 - r_d}{2}\right)^2 l$$

, where 1 is the displacement of a log in its longitudinal direction through the cutting part of the machine,

j) calculating the total amount of logs by adding the contribution of the calculated volume of the log,

k) repeating the steps b) to j).

The purpose of step a) is to obtain the initial distance $r_0$ to the base on which the log rests during the transition from the cutting to the splitting part of the machine, for the subsequent calculation of the log diameter.

The purpose of step b) is to determine the start of a new measurement cycle. The predetermined tolerance distance $r_{tol}$ eliminates a possibility of a process error in the event that the underlying surface of a log is covered in sawdust. The recommended value for the tolerance distance $r_{tol}$ is 3 cm.

The recommended time interval $\Delta t$ for capturing distance measurements in step c) is 1 μs.

To round off the captured discrete values of the measured distance in step d), a method can be used, with which the individual discrete values are first divided by ten, then the values following the decimal point are deleted and the values thus obtained are multiplied again by ten.

The purpose of step e) is to eliminate incorrect measurements that occur due to particles of sawdust flying through the measuring area when cutting logs.

The purpose of step d) is to eliminate incorrect measurements that occur due to large pieces of wood or tree bark flying through the measuring area when cutting logs.

The shortest measured distance $r_d$ stored in step g) serves as the basis for calculating the log diam-

eter, which is $r_0 - r_d$.

The purpose of step h) is to properly complete a measurement cycle, wherein, as in step b), the predetermined tolerance distance $r_{tol}$ eliminates a possibility of a process error in the event that the underlying surface of a log is covered in sawdust. At the same time, the purpose of step h) is to eliminate incorrect measurements that would be caused by a possible swinging of the log backwards into the measuring area of the machine after the log has rolled from the cutting area to the splitting area of the machine. If the operating cycle of the cutting and splitting machine is between 4 and 6 seconds, a predetermined time interval $\Delta t_z$ of approximately 2 seconds is suitable.

When calculating the volume of the log in step i) there may be a small error in the calculation of the volume of the last piece of log, as this is usually not as long as the displacement of the machine.

In step j), the calculated log volume is added to the log volume from the previous iterations of the process to obtain the total log volume.

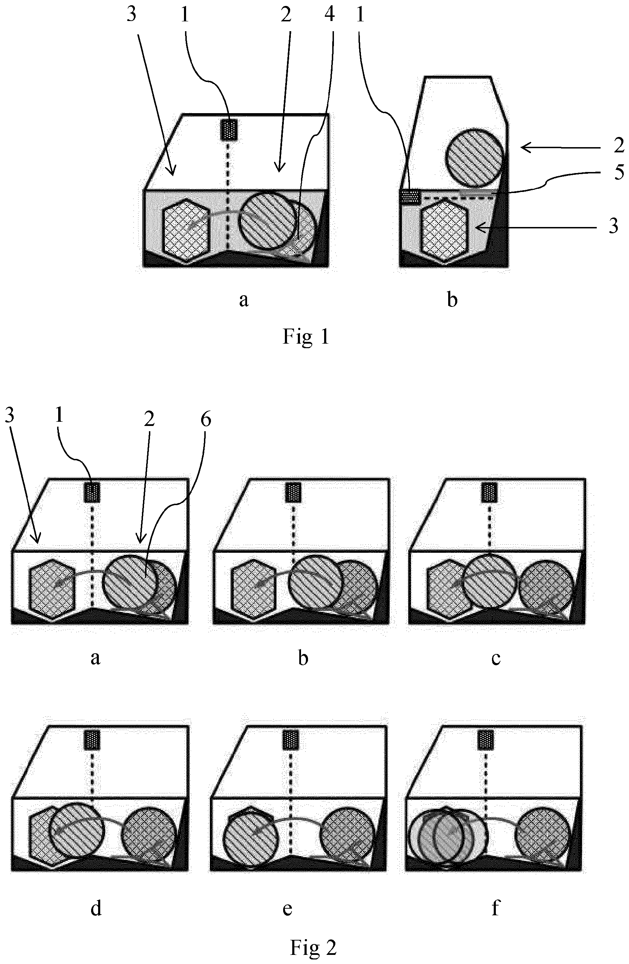

Figure 2 schematically shows the implementation of distance measurements at the transition of a log 6 from a cutting 2 to a splitting 3 part of the machine. Figure 2-a shows a push of the log with a push latch from the cutting part into the splitting part of the machine, in Figure 2-b the log is in the measuring range of the contactless distance meter, in Figure 2-c the log is in the position when the shortest distance is measured, in Figure 2-d the log is rolled into the splitting part of the machine, in Figure 2-e the log has left the measuring range of the contactless distance meter, Figure 2-f shows the swing of a log backwards into the measuring area of the contactless distance meter.

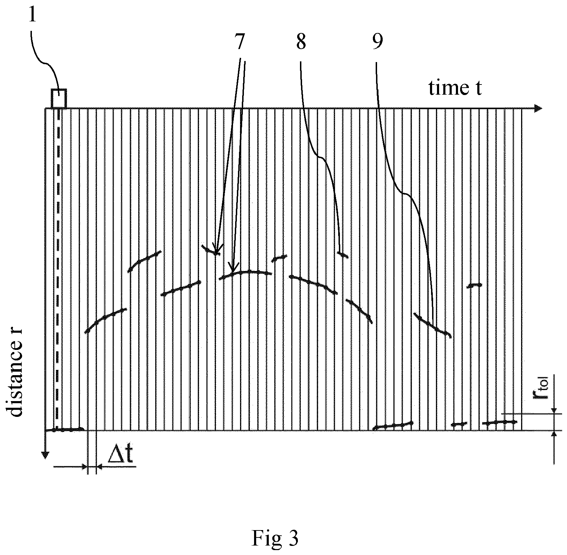

Figure 3 shows a measurement diagram. The diagram serves only to illustrate and better understand the invention and is therefore drawn in a caricature. Particularly caricatured is $\Delta t$ which is much narrower in reality. The curves in the diagram represent distance measurements. The reference numeral 7 indicates the distance measurements captured at a predetermined time interval $\Delta t$, i.e. discrete values 7. Reference numeral 8 indicates the measurements that are eliminated in step e) of said method. And reference numeral 9 indicates the measurements that are eliminated in step f) of said method.

The subject of the invention is also a computer-readable medium having instructions stored thereon, which, when executed by a computer, cause the above-described method for determining the amount of logs on a cutting and splitting machine to be performed.

The subject of the invention is also a computer programme comprising computer executable instructions when the programme runs on a computer, and cause the computer to execute the above-described method for determining the amount of logs on a cutting and splitting machine.

The measuring system for determining the amount of logs on a cutting and splitting machine comprises a contactless distance meter and a computer with a processing unit adapted to perform the method described above for determining the amount of logs on a cutting and splitting machine.

The computer can be equipped with at least one output unit. The output unit is selected from the group consisting of a display and a printer. The output unit is used to display/show data on the amount of logs.

The computer can be equipped with at least one input unit. The input unit is selected from the group consisting of a keyboard and a touch screen. The input unit can be used to enter/change the parameters of the above method, such as log displacement l, tolerance distance $r_{tol}$, time interval $\Delta t$ and time interval $\Delta t_z$.

The contactless distance meter is installed, when in use, on the cutting and splitting machine to measure the distance to a log during the transition of the log from the cutting to the splitting part of the machine. The measuring system and method for determining the amount of logs on the cutting and splitting machine according to the invention can be used both on a cutting and splitting machine having the cutting area of the machine located next to the splitting part (horizontal version) and on a cutting and splitting machine having the cutting area of the machine arranged above the splitting part (vertical version). In the vertical version of the machine, some steps of the method are not necessary (e.g. elimination of the measurements due to the log swinging backwards into the measuring range of the machine, as this cannot happen in this version of the machine), but their implementation does not compromise the calculation of the log volume.

The process unit can be selected from a microprocessor or a special purpose circuit.

A method for using the system for determining the amount of logs on a cutting and splitting machine of the invention is described in the following. A contactless distance meter is mounted on the cutting and splitting machine to be directed substantially perpendicular to the transition area between the cutting 2 and the splitting 3 part of the machine. Figure 1 is a schematic representation of the arrangement of a contactless distance meter on a) a horizontal and b) a vertical cutting and splitting machine. After installing the contactless distance meter, it must be calibrated to obtain a starting point to the base on which the log rests when passing from the cutting to the splitting part of the machine. The log is then dosed in its longitudinal direction into the cutting part of the cutting machine for an advancement l, i.e. until the log reaches the latch or a log cutting length limiting sensor that stops log dosing. This is followed by cutting the log and then passing the cut piece of log into the splitting part of the machine, wherein measurement of the distance is performed. The transition of the log can cause a push of a push latch 4 in the horizontal version of the machine or a release or withdrawal of a retaining latch 5 in the vertical version of the machine, whereby the log falls into the splitting part of the machine under the influence of its weight. In the splitting part of the machine, a cut piece of log is split into split logs by means of a push piston. The computer processes the received distance measurements from the contactless distance meter by eliminating incorrect measurements due to flying particles of sawdust, due to large pieces of wood or bark flying through the measuring area, and due to possible oscillation of the log during the transition from the cutting part to splitting part of the machine back to measuring area. Furthermore, the computer determines the end of a measurement cycle and calculates the amount of logs and displays and/or prints the obtained result.

**Claims**

1. A method for determining the amount of logs on a cutting and splitting machine comprising the steps:

   a) calibrating a distance meter to obtain an initial distance $r_0$, wherein initial distance $r_0$ represents the distance from the contactless distance meter to the base on which the log rests during the transition from the cutting to the splitting part of the machine,
   b) continuously performing distance measurements, a measurement cycle starting when a contactless distance meter measures a distance shorter than the initial distance $r_0$ and longer than the initial distance $r_0$ reduced by a predetermined tolerance distance $r_{tol}$,
   c) capturing distance measurements at a predetermined time interval $\Delta t$,
   d) rounding the captured discrete values of the measured distance,
   e) comparing a predetermined number of consecutive rounded captured discrete values of the measured distance and excluding measurements if these values are not the same,
   f) comparing successively captured distance measurements at a predetermined time interval $\Delta t$ without the measurements excluded in the previous step, excluding distance measurements that do not follow the pattern of the initial gradually shortening the measured distance and then lengthening the measured distance,
   g) storing the shortest measured distance $r_d$,
   h) completing a measurement cycle when the contactless distance meter detects a distance between $r_0$ and $r_0$-$r_{tol}$, excluding all measurements measured within a predetermined time interval $\Delta t_z$ from the moment the contactless distance meter has detected the distance between $r_0$ and $r_0$-$r_{tol}$,

   i) calculating a volume of a log at each end of the measurement cycle according to the equation:

$$V_i = \pi \left(\frac{r_0 - r_d}{2}\right)^2 l,$$

where l is the displacement of a log in its longitudinal direction through the cutting part of the machine,
   j) calculating the total amount of logs by adding the contribution of the calculated volume of the log,
   k) optionally repeating the steps b) to j).

2. A method according to claim 1, **characterized in that** the value for the tolerance distance $r_{tol}$ is about 3 cm.

3. A method according to claim 1 or 2, **characterized in that** a time interval $\Delta t$ for capturing distance measurements in step c) is about 1μs.

4. A method according to any of the previous claims, **characterized in that** for rounding the captured discrete values of the measured distance in step d), a method is used, with which the individual discrete values are first divided by ten, then the values following the decimal point are deleted and the values thus obtained are multiplied again by ten.

5. A method according to any of the previous claims, **characterized in that** the predetermined time interval $\Delta t_z$ is about 2 seconds.

6. A computer-readable medium having instructions stored thereon, which, when executed by a computer, cause the execution of the method according to any of the previous claims.

7. A computer programme comprising computer executable instructions when the programme runs on a computer, and causes the computer to execute the method according to any of claims 1 to 5.

8. A measuring system for determining the amount of logs on a cutting and splitting machine comprises a contactless distance meter and a computer with a processing unit adapted to perform the method according to any of claims 1 to 5.

9. A measuring system according to claim 8, wherein the computer is equipped with at least one output unit selected from the group consisting of a display and a printer.

10. A measuring system according to claim 8 or 9, wherein the computer is equipped with at least one input unit selected from the group consisting of a keyboard and a touch screen.

11. A measuring system according to any of claims 8 to 10, wherein a processing unit is selected from a microprocessor or a special purpose circuit.

**Patentansprüche**

1. Verfahren zum Bestimmen der Menge von Holzstämmen auf einer Schneid- und Spaltmaschine, umfassend die folgenden Schritte:

   a) Kalibrieren einer Distanzmesseinrichtung zum Erhalten einer Anfangsdistanz $r_0$, wobei die Anfangsdistanz $r_0$ die Distanz von der kontaktlosen Distanzmesseinrichtung zu der Basis ist, auf welcher der Holzstamm während des Übergangs vom Schneid- zum Spaltteil der Maschine ruht,
   b) kontinuierliches Durchführen von Distanzmessungen, wobei ein Messzyklus startet, wenn eine kontaktlose Distanzmesseinrichtung eine Distanz misst, die kürzer als die Anfangsdistanz $r_0$ und länger als die Anfangsdistanz $r_0$, verringert um eine vorbestimmte Toleranzdistanz $r_{tol}$, ist,
   c) Aufnehmen von Distanzmessungen in einem vorbestimmten Zeitintervall $\Delta t$,
   d) Runden der aufgenommenen diskreten Werte der gemessenen Distanz,
   e) Vergleichen einer vorbestimmten Anzahl von aufeinanderfolgenden gerundeten aufgenommenen diskreten Werten der gemessenen Distanz und Ausschließen von Messungen, falls diese Werte nicht dieselben sind,
   f) Vergleichen aufeinanderfolgender aufgenommener Distanzmessungen in einem vorbestimmten Zeitintervall $\Delta t$, ohne die in dem vorhergehenden Schritt ausgeschlossenen Messungen, wobei Distanzmessungen, die nicht dem Muster der anfänglichen graduellen Verkürzung der gemessenen Distanz und dann Verlängerung der gemessenen Distanz folgen, ausgeschlossen werden,
   g) Speichern der kürzesten gemessenen Distanz $r_d$,
   h) Abschließen eines Messzyklus, wenn die kontaktlose Distanzmesseinrichtung eine Distanz zwischen $r_0$ und $r_0 - r_{tol}$ detektiert, wobei alle Messungen, die innerhalb eines vorbestimmten Zeitintervalls $\Delta t_z$ von dem Zeitpunkt, zu dem die kontaktlose Distanzmesseinrichtung die Distanz zwischen $r_0$ und $r_0 - r_{tol}$ detektiert hat, ausgeschlossen werden,
   i) Berechnen eines Volumens eines Holzstamms an jedem Ende des Messzyklus gemäß der Gleichung: $V_i = \pi(\frac{r_0 - r_d}{2})^2 l$, wobei $l$ die Verlagerung eines Holzstamms in dessen Längsrichtung durch den Schneidteil der Maschine ist,
   **j)** Berechnen der Gesamtmenge von Holzstämmen durch Addieren des Beitrags des berechneten Volumens des Holzstamms,
   **k)** optional Wiederholen der Schritte b) bis j).

2. Verfahren nach Anspruch 1, **dadurch gekennzeichnet, dass** der Wert für die Toleranzdistanz $r_{tol}$ etwa 3 cm beträgt.

3. Verfahren nach Anspruch 1 oder 2, **dadurch gekennzeichnet, dass** ein Zeitintervall $\Delta t$ zum Aufnehmen von Distanzmessungen in Schritt c) etwa 1 $\mu$s beträgt.

4. Verfahren nach einem der vorhergehenden Ansprüche, **dadurch gekennzeichnet, dass** zum Runden der aufgenommenen diskreten Werte der in Schritt d) gemessenen Distanzen, ein Verfahren verwendet wird, mit dem die individuellen diskreten Werte zuerst durch zehn dividiert werden, dann die auf das Dezimalkomma folgenden Werte gelöscht werden und die somit erhaltenen Werte wieder mit zehn multipliziert werden.

5. Verfahren nach einem der vorhergehenden Ansprüche, **dadurch gekennzeichnet, dass** das vorbestimmte Zeitintervall $\Delta t_z$ etwa 2 s beträgt.

6. Computerlesbares Medium, das darin Anweisungen gespeichert hat, die bei Ausführung durch einen Computer die Ausführung des Verfahrens nach einem der vorhergehenden Ansprüche bewirken.

7. Computerprogramm, das computerausführbare Anweisungen umfasst, wenn das Programm auf einem Computer läuft, und den Computer veranlasst, das Verfahren nach einem der Ansprüche 1 bis 5 durchzuführen.

8. Messsystem zum Bestimmen der Menge von Holzstämmen auf einer Schneid- und Spaltmaschine, umfassend eine kontaktlose Distanzmesseinrichtung und einen Computer mit einer Verarbeitungseinheit, die eingerichtet ist zum Durchführen des Verfahrens nach einem der Ansprüche 1 bis 5.

9. Messsystem nach Anspruch 8, wobei der Computer mit mindestens einer Ausgabeeinheit ausgestattet ist, ausgewählt aus der aus einer Anzeige und einem Drucker bestehenden Gruppe.

10. Messsystem nach Anspruch 8 oder 9, wobei der Computer mit mindestens einer Eingabeeinheit ausgestattet ist, ausgewählt aus der aus einer Tastatur und einem Touchscreen bestehenden Gruppe.

**11.** Messsystem nach einem der Ansprüche 8 bis 10, wobei eine Verarbeitungseinheit aus einem Mikroprozessor oder einer Sonderzweckschaltung ausgewählt ist.

**Revendications**

**1.** Procédé de détermination de la quantité de journaux sur une machine de découpage et de division comprenant les étapes suivantes :

a) l'étalonnage d'un dispositif de mesure de distance pour obtenir une distance initiale $r_0$, dans lequel la distance initiale $r_0$ représente la distance du dispositif de mesure de distance sans contact à la base sur laquelle le journal repose pendant la transition de la partie de découpage à la partie de division de la machine,

b) l'exécution en continu de mesures de distance, un cycle de mesure commençant lorsque qu'un dispositif de mesure de distance sans contact mesure une distance plus courte que la distance initiale $r_0$ et plus longue que la distance initiale $r_0$ réduite par une distance de tolérance prédéterminée $r_{tol}$,

c) la capture des mesures de distance à un intervalle temporel prédéterminé $\Delta t$,

d) l'arrondissement des valeurs discrètes capturées de la distance mesurée,

e) la comparaison d'un nombre prédéterminé de valeurs discrètes capturées arrondies consécutives de la distance mesurée et l'exclusion des mesures si ces valeurs ne sont pas les mêmes,

f) la comparaison des mesures de distance capturées de manière successive à un intervalle temporel prédéterminé $\Delta t$ sans les mesures exclues dans l'étape précédente, excluant des mesures de distance qui ne suivent pas le motif du raccourcissement progressif initial de la distance mesurée et ensuite l'allongement de la distance mesurée,

g) le stockage de la distance mesurée la plus courte $r_d$,

h) l'achèvement d'un cycle de mesure lorsque le dispositif de mesure de distance sans contact détecte une distance comprise entre $r_0$ et $r_0$-$r_{tol}$, à l'exclusion de toutes les mesures mesurées à l'intérieur d'un intervalle temporel prédéterminé $\Delta t_z$ à partir du moment où le dispositif de mesure de distance sans contact a détecté la distance comprise entre $r_0$ et $r_0$-$r_{tol}$,

i) le calcul d'un volume d'un journal à chaque extrémité du cycle de mesure selon l'équation :

$$V_i = \pi \left(\frac{r_0-r_d}{2}\right)^2 l$$

, où 1 est le déplacement d'un journal dans sa direction longitudinale à travers la partie de découpage de la machine,

j) le calcul de la quantité totale de journaux en ajoutant la contribution du volume calculé du journal,

k) la répétition éventuellement des étapes b) à j).

**2.** Procédé selon la revendication 1, **caractérisé en ce que** la valeur pour la distance de tolérance $r_{tol}$ est d'environ 3 cm.

**3.** Procédé selon la revendication 1 ou 2, **caractérisé en ce qu'**un intervalle temporel $\Delta t$ permettant de capturer des mesures de distance dans l'étape c) est d'environ 1 us.

**4.** Procédé selon l'une quelconque des revendications précédentes, **caractérisé en ce que** pour l'arrondissement des valeurs discrètes capturées de la distance mesurée dans l'étape d), un procédé est utilisé avec lequel les valeurs discrètes individuelles sont d'abord divisées par dix, ensuite les valeurs suivant le point décimal sont effacées et les valeurs ainsi obtenues sont multipliées de nouveau par dix.

**5.** Procédé selon l'une quelconque des revendications précédentes, **caractérisé en ce que** l'intervalle temporel prédéterminé $\Delta t_z$ est d'environ 2 secondes.

**6.** Support lisible par ordinateur sur lequel sont stockées des instructions qui, lorsqu'elles sont exécutées par un ordinateur, amènent l'exécution du procédé selon l'une quelconque des revendications précédentes.

**7.** Programme informatique comprenant des instructions exécutables par ordinateur lorsque le programme s'exécute sur un ordinateur, et amène l'ordinateur à exécuter le procédé selon l'une quelconque des revendications 1 à 5.

**8.** Système de mesure pour déterminer la quantité de journaux sur une machine de découpage et de division comprenant un dispositif de mesure de distance sans contact et un ordinateur ayant une unité de traitement adaptée pour exécuter le procédé selon l'une quelconque des revendications 1 à 5.

**9.** Système de mesure selon la revendication 8, dans lequel l'ordinateur est équipé d'au moins une unité de sortie sélectionnée à partir du groupe se composant d'un écran et d'une imprimante.

**10.** Système de mesure selon la revendication 8 ou 9, dans lequel l'ordinateur est équipé d'au moins une unité d'entrée sélectionnée à partir du groupe se composant d'un clavier et d'un écran tactile.

**EP 3 925 740 B1**

**11.** Système de mesure selon l'une quelconque des revendications 8 à 10, dans lequel une unité de traitement est sélectionnée à partir d'un microprocesseur ou d'un circuit à usage spécial.

Fig 1

Fig 2

Fig 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SE 353958 B